# EUROPEAN PATENT APPLICATION

(11) **EP 2 428 922 A1**
(43) Date of publication of application: **14.03.2012**
(21) Application number: 11180614.7
(22) Date of filing: 08.09.2011
(51) Int. Cl.: G06Q 10/00

(54) **Method and system for providing social network service with mobile terminal**

(30) Priority: 10.09.2010 KR 20100089028
(71) Applicant: SAMSUNG ELECTRONICS CO., LTD., Suwon-si, Gyeonggi-do (KR)
(72) Inventor: Sung, Joo Il, Gyeonggi-do (KR); Jeon, Han Kyung, Gyeonggi-do (KR); Ko, Kwang Tae, Gyeonggi-do (KR); Noh, Gil Young, Gyeonggi-do (KR); Jin, Yun Hyung, Gyeonggi-do (KR)
(74) Representative: Jenkins, Richard Gavin

(57) **Abstract**

A method and system for providing mobile terminal users with a social network service using a mobile terminal are provided. The method includes transmitting an event generated by the service proposer from the service proposer to the service provider, registering the event with the service provider, transmitting the registered event from the service provider to the service user, transmitting personal information input by the service user who is performing the event from the service user to the service provider, and updating, at the service provider, a personal information database with the personal information received from the service user.

## Description

### BACKGROUND OF THE INVENTION

### 1. Field of the Invention:

The present invention relates to a social network service. More particularly, the present invention relates to a method and system for providing mobile terminal users with a social network service based on a location-based service.

### 2. Description of the Related Art:

With the widespread use of smartphones, the social network services are increasingly being used. The social network service is an online service implemented by adopting the social concept onto a communication network which allows people to establish social relationships via the network. Recently, many companies are providing various social network services with which people may strengthen relationships with each other. As the social network services are becoming more and more popular, there are users' needs for more diversified and sophisticated social network services.

### SUMMARY OF THE INVENTION

Aspects of the present invention are to address at least the above-mentioned problems and/or disadvantages and to provide at least the advantages described below. Accordingly, an aspect of the present invention is to provide a method and system for providing a social network service using a location-based service.

Another aspect of the present invention is to provide a method and system for providing a social network service that is capable of providing the services customized to user's needs, such as users' characteristics and interests.

In accordance with an aspect of the present invention, a method for providing a service in a social network system including a service proposer, a service provider, and a service user is provided. The method includes transmitting an event generated by the service proposer from the service proposer to the service provider, registering the event with the service provider, transmitting the registered event from the service provider to the service user, transmitting personal information input by the service user who is performing the event from the service user to the service provider, and updating, at the service provider, a personal information database with the personal information received from the service user.

In accordance with another aspect of the present invention, a social network system is provided. The system includes a service proposer for generating an event and reward information for execution of the event and for providing service users with the reward information, a service provider for receiving the event from the service proposer, for registering the event, for providing the service users with the registered event, for receiving personal information from the service users, and for updating a personal information database with the received personal information, a service user for receiving the event from the service provider, for transmitting personal information to the service provider while performing the received event, and for receiving the reward information from the service provider as a reward for successful execution of the event.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a social network according to an exemplary embodiment of the present invention;

FIG. 2 is a signaling diagram illustrating a method for providing a social network service according to an exemplary embodiment of the present invention;

FIG. 3 is a flowchart illustrating details of step 203 of FIG. 2 according to an exemplary embodiment of the present invention;

FIG. 4 is a flowchart illustrating details of step 207 of FIG. 2 according to an exemplary embodiment of the present invention;

FIG. 5 is a signaling diagram illustrating a procedure for a service provider to provide a mission to a service user using a location-based service according to an exemplary embodiment of the present invention; and

FIGs. 6A to 6G are diagrams illustrating exemplary screens presented in the method for providing a social network service according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

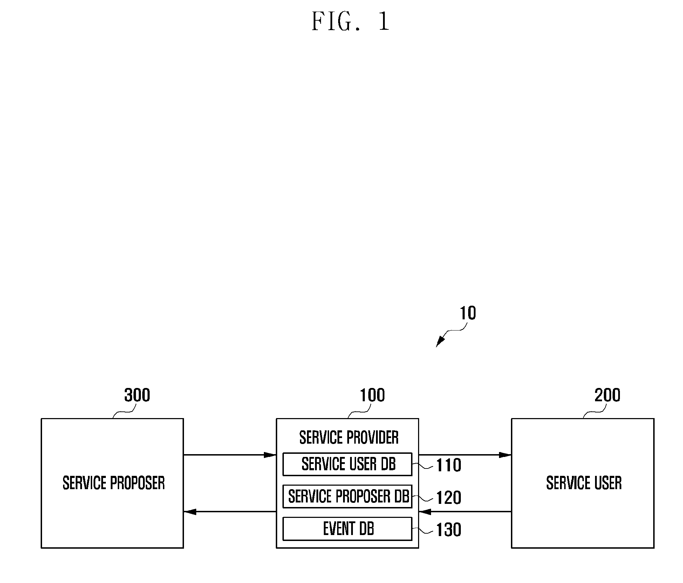

FIG. 1 is a block diagram illustrating a configuration of a social network according to an exemplary embodiment of the present invention.

Referring to FIG. 1, the social network system 10 includes a service provider 100, a service user 200, and a service proposer 300.

The service provider 100 includes a server for performing wired/wireless network communication and is responsible for analyzing and registering events received from the service proposer 300 and providing the events to the service user 200. In the present disclosure, the term 'event' refers to an event-related content or application that is generated by the service proposer 300 and delivered to the service user 200 by the service provider 100. In exemplary embodiment of the present invention, the event can occur in the form of a mission or an advertisement. The social network service of the exemplary embodiment of the present invention can be provided in such a way that the service provider 100 provides the service user 200 with the mission generated by the service proposer 300 and the service user performs the mission.

The service provider 100 is provided with both a web interface and a mobile interface. According to an exemplary embodiment of the present invention, the service provider 100 can communicate with the service proposer 300 via the web interface and with the service user 200 via the mobile interface.

The service provider 100 according to an exemplary embodiment of the present invention includes a service user DataBase (DB) 110, a service proposer DB 120, and an event DB 130.

The service user DB 110 can store basic information, such as an IDentitifer (ID), a name, an age, and a sex of the service user 200, and detailed information, such as education, tastes, and hobbies of the service user 200. According to an exemplary embodiment of the present invention, if the service user 200 accesses the service provider 100 to request use of the service, the service provider 100 makes a request to the service user 200 for the basic information and saves the basic information provided by the service user 200 in the service user DB 110. Next, the service provider 100 provides the service user 200 with an event with a request for the detailed information, such as education, tastes, and hobbies, and saves the detailed information provided by the service user 200 in the service user DB 110. Whenever the service user 200 is provided with the event, the service provider 100 can ask for the personal information of the service user 200. In a case where the newly received personal information is identical with previously received personal information, the service provider 100 accumulates the personal information in the service user DB 110. The service provider can provide a specific user 200 with a targeted advertisement using the personal information saved in the service user DB 110. The service user DB 110 also can store the friend information and executed event information per service user.

The service proposer DB 120 stores a list of the service proposers 300. In more detail, the service proposer DB 120 stores the identity information of the service proposer 300 and a number of event proposals. If an event is received from the service proposer 300 and if the service proposer 300 is the one sent the event first, the service provider 100 adds the identity information of the service proposer 300 that sent the event and increments the event proposal count by 1 in the service proposer DB 120. Afterward, if an event is received from the same service proposer 300, the service provider 100 updates the service proposer DB 120 by incrementing the event proposal count by 1.

The event DB 130 stores information related to the event information received from the service proposer 300, a successful event execution verification method, and a reward method for successful event execution. The event information can include personal question items to be additionally asked to the service user 200. When an event is received from the service proposer 300 and stored in the event DB 130, the service provider 100 can store the information on the service user 200 retrieved from the service user DB 110 that matches the properties of the received event. For example, if the event received from the service proposer 300 is the event related to 'travel', the service provider 100 can retrieve the service user whose hobby is 'travel' from the service user DB 110 and save the retrieved users and the received event that matches with each other. The reward method can include using gift information, point information, and/or experience points.

According to an exemplary embodiment of the present invention, the service provider 100 can further include a question pool DB (not shown). The question pool DB stores question items to query for personal information of the service user 200. According to an exemplary embodiment of the present invention, the question pool DB can store question items for acquiring basic personal information from the service user 200. For example, the question pool DB can include the question items to query for an ID, a name, an age, and a sex of the service user 200. The question pool DB also can store the question items for acquiring the detailed personal information in association with events. The service proposer 300 generates an event including question items for acquiring detailed personal information from the service user 200, retrieves, when an event is sent to the service provider 100, the information responsive to the question items included in the event, and saves the retrieved information in the question pool DB. According to an exemplary embodiment of the present invention, the question pool DB also can store the number of accumulations of the question. The event received from the service proposer 300 includes the question item for acquiring personal information, and different events may include the same question item. In this case, the service provider 100 can store the number of accumulations of the same question item in the question pool DB along with the question item.

The service provider 100 according to an exemplary embodiment of the present invention can include a verification means for verifying successful event execution. The event received from the service proposer 300 includes information on the successful event execution verification method, and the verification means of the service provider 100 compares the execution result of the event received from the service user 200 with the information related to the successful event execution verification method to determine whether the event is executed successfully.

The service provider 100 according to an exemplary embodiment of the present invention supports the location-based service framework and the social network service frame work. The service provider 100 determines the current location of the service user 200 and notifies the service user 200 of the events executable in the range of a predetermined radius around the current location.

When the service user 200 connects to an Access Point (AP) positioned at a specific location under the awareness of the service provider 100, the service provider 100 can determine whether the event is to occur in the range allowing access to the AP and provide the service user 200 with the information on the event. The service provider 100 also can locate the service user 200 with the assistance of the mobile communication network and determine whether the event is to occur in the cell where the service user 200 is located so as to provide the service user 200 with the information on the event. The service user also can include a Global Positioning System (GPS) module such that, when the coordinates of the current location acquired based on the GPS signal received from a GPS satellite is transmitted to the service provider, the service provider 100 provides the service user 200 with the information on the event that is to occur in the range of a predetermined radius around the current location of the service user 200. In a case where a Bluetooth communication module is installed at a specific position of which location information is known to the service provider 100 and the service user 200 accesses the Bluetooth communication module by means of a Bluetooth connection, the service provider 100 determines whether the event is to occur in the range allowing access to the Bluetooth communication module and provides the service user 200 with the information on the event.

The service provider 100 also can provide the service user 200 with a list of neighbor service users located within the range of a predetermined radius around the current location of the service user 200.

In an exemplary case where the service user 200 accesses the AP positioned at a specific location of which location information is known to the management of the service provider, the service provider 100 determines whether other service users are located within the range accessible to the AP and provides the service user 200 with the list of the other service users. The service provider 100 can locate the service user 200 with the assistance of the mobile communication network, determine whether other service users are located within the cell where the service user 200 is located, generate a list of neighbor service users, and provide the service user 200 with the list. The service user 200 also can include a GPS module such that, when the coordinates of the current location acquired based on the GPS signal received from a GPS satellite is transmitted to the service provider, the service provider 100 provides the service user 200 with the information on the other service users located in the range of a predetermined radius around the current location of the service user 200. In a case where a Bluetooth communication module is installed at a specific location of which location information is known to the service provider 100 and the service user 200 accesses the Bluetooth communication module by means of a Bluetooth connection, the service provider 100 determines whether the other service users are located in the range allowing access to the Bluetooth communication module and provides the service user 200 with the information on the other service users.

According to an exemplary embodiment of the present invention, the service provider 100 can provide the service user 200 with the events that match with the properties of the service user among the events executable in the range of a predetermined radius around the current location of the service user 200. According to an exemplary embodiment of the present invention, the service provider 100 can determine the current location of the service user 200 and the location where an event is to occur, calculate the optimal route from the current location of the service user 200 to the location where the event is to occur, and provide the service user 200 with the optimal route.

In an exemplary embodiment of the present invention, the optimal route can be the route in a straight line connecting the current location of the service user 200 and the location where the event is to occur or the shortest route by vehicle or on foot. When the service provider 100 provides the service user 200 with the shortest route by vehicle, the optimal route can be selected by reflecting the traffic status information, i.e., the route having relatively low traffic congestion.

The service provider 100 also can provide the service user 200 with the route information by public transportation, such as bus and/or subway, for arrival to the location where the event is to occur. Here, the service provider can provide the service user 200 with the information on the bus line, subway line, and/or the number of stations and a fare for arrival to the location where the event is to occur.

In a case of providing the optimal route on foot, the service provider 100 can provide the service user 200 with the route selected in consideration of whether there is an area under construction between the current location of the service user 200 and the location where the event is to occur and whether there is any road event in progress.

According to an exemplary embodiment of the present invention, the service provider 100 can configure such that other service users located within a predetermined radius around the current location of the service user 200 can access the message posted by the service user 200. For example, if the service user 200 posts a text message on the web site of the service provider 100 for summoning friends to take part in an event and if the event is a mission having the property required to be performed at the location where the event is to occur, the service provider 100 configures such that the service users located within a predetermined radius around the current location of the service user 200 can access the text message.

The service provider 100 can assign a rank to the service user 200 according to a number of uses of the service and reward points gained. For example, the service provider 100 can classify missions into basic, intermediate, and advanced ranks such that the service users also can be classified into basic user, intermediate user, and advanced user. When providing a mission to the service user 200, the service provider 100 determines the rank of the service user 200 and the rank requirements of the mission such that only the service user who meets the rank requirement of the mission can take on the mission. For example, in a case where the service user 200 accesses the service provider 100 to search for missions, the service provider 100 can provide a list of the missions of which rank is equal to or less than the rank of the servicer user 200.

When the service user 200 performs a mission, the service provider 100 can provide the service user 200 with the information on the route from the current location of the service user 200 to the location where the mission is to occur. If the information on the current information of the service user 200 is received, the service provider 100 can provide the optimal route calculated between current location of the service user 200 and the location where the mission is to occur. According to an exemplary embodiment of the present invention, the service provider 100 calculates the shortest route between a specific location indicated by the service user 200 and the location where the mission is to occur and provides the shortest route with the service user 200 and/or other service users. If a map image on which the route between the location of a specific service user and the location where the mission is to occur is drawn is received from the service user 200, the service provider can provide the specific service user with the map image.

The service user 200 is the user subscribed for the social network service and has a mobile communication terminal. In exemplary embodiment of the present invention, the mobile communication terminal can be any of a Global System for Mobile communications (GSM) terminal, a Universal Mobile Telecommunication Service (UMTS) terminal, a Code Division Multiple Access (CDMA) terminal, a Wideband CDMA (WDMA) terminal, an International Mobile Telecommunication 2000 (IMT-2000) terminal, a General Packet Radio Service (GPRS) terminal, etc.

The service user 200 sends personal information to the service provider 100 in response to the service provider's request. The personal information can include basic personal information, such as a name, a sex, a height, an age, and a nickname, and detailed personal information, such as education, tastes, preferences, and hobbies. The service user 200 can receive the event provided by the service provider 100 via a process for accessing the service provider 100 and selecting an event in such a way that, if the service provider sends the event to the service user 200 in the form of a push notification, the service user receives the event. Once the event is provided, the service user 200 can take part in and execute the event. The service user 200 notifies the service provider 100 of the event execution result and acquires a reward from the service proposer 300 or the service provider 100 for the successful event execution. According to an exemplary embodiment of the present invention, the service user 200 can acquire a point, an experience point, and/or a gift coupon from the service proposer 300 or the service provider 100. The service user 200 can continue providing the service provider 100 with the personal information, such as hobbies, tastes and education, such that the service provider 100 accumulates the information, such as the hobbies, tastes, and education of the service user 200, to determine the propensity of the service user 200 based on the accumulated personal information and provide the service user 200 with the event related to the user's propensity. In this manner, the service user 200 can receive the user-customized service. Wherever the event execution is successful, the service user 200 can earn the experience point. The earned experience point is updated in the service user DB 100 of the service provider 100.

The service proposer 300 generates and sends an event to the service provider 100 and gives the reward for the successful event execution of the service user 200. The service proposer 300 develops missions and supplies the developed mission to the service provider 100. According to an exemplary embodiment of the present invention, the service proposer 300 can develop a mission based on or not based on the location-based service and supply the developed mission to the service provider 100. The service proposer 300 also can generate a targeted advertisement directed at the service user 200 having specific propensity or a common advertisement and supply the advertisement to the service provider 100. When generating the targeted advertisement, the service proposer 300 generates the advertisement with keywords for differentiating the service user 200. According to an exemplary embodiment of the present invention, the service proposer 300 can provide the service provider 100 with gift information along with the event.

In exemplary embodiment of the present invention, the service proposer 300 can be any of an advertiser aiming to provide a common advertisement and/or a targeted advertisement, a service industrialist for providing the social network service, and an individual aiming to form a relationship with public organizations and other individuals to participate in a public business.

According to an exemplary embodiment of the present invention, the social network system 10 can further include a Public Authorization provider (not shown). The Public Authorization provider is responsible for determining whether the service user 200 executes an event successfully. In a case of the event requiring verification on the successful event execution by the service user 200, it is not satisfactory for the service provider 100 or the service proposer 300 to verify the successful event execution. After the event has been executed by the service user 200, if the execution result is transmitted to the service provider 100, the service provider 100 transmits the event execution result to the service proposer 300, and the service proposer 300 transmits the event execution result to the Public Authorization provider. The Public Authorization provider checks the event execution result to determine whether the event has been executed successfully and sends the determination result to the service proposer 300, and the service proposer 200 gives the user the reward for the successful event execution. At this time, there should be a negotiation on the mission between the service provider 100 and the Public Authorization provider, and when the mission is developed by the Public Authorization provider, the mission can be registered with the service provider 100 directly without a reward that can be authenticated to the user.

With reference to the configuration of the aforementioned social network system 10, a description is made of the service provision procedure of the social network system 10.

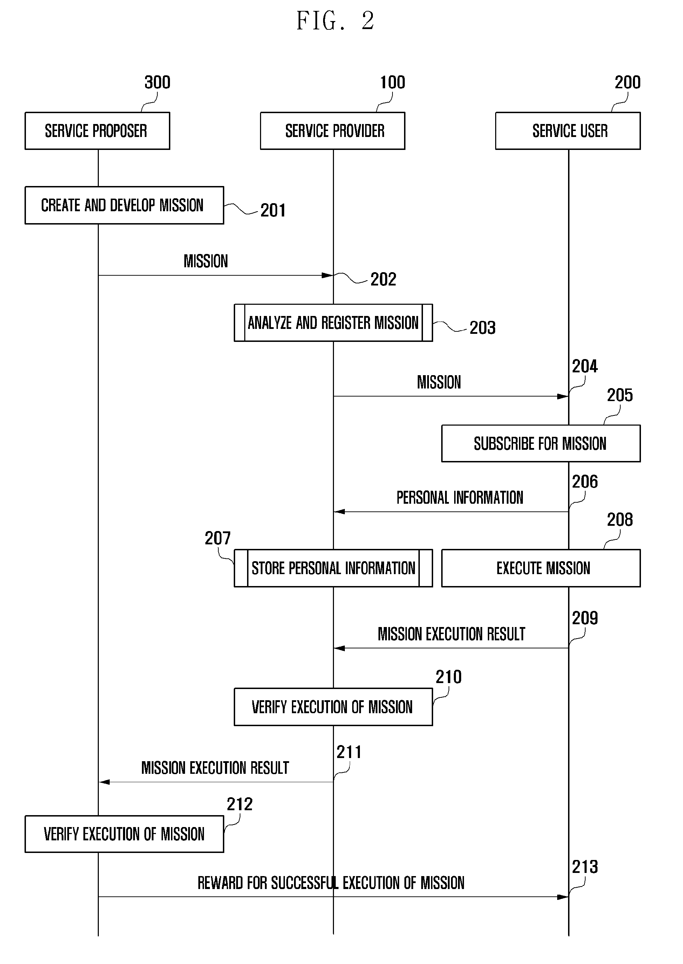

FIG. 2 is a signaling diagram illustrating a method for providing a social network service according to an exemplary embodiment of the present invention. The description is directed to the case of performing the mission as an event with reference to FIG. 2. However, the present invention is not limited thereto but can be applied to the case where the service proposer 300 creates and supplies an advertisement to the service provider 100 such that the service provider 100 provides the service user 200 with the advertisement.

Referring to FIG. 2, the service proposer 300 produces and develops a mission in step 201. According to an exemplary embodiment of the present invention, the service proposer 300 can develop a mission based on or not based on a location-based service. The service proposer 300 also can create a targeted advertisement directed at the service users 200 having a specific propensity and/or a common advertisement and supply the advertisement to the service user 200. In a case where a targeted advertisement is created by the service proposer 300, the targeted advertisement can include a keyword for discriminating the targeted service users 200 from others. For example, when creating an advertisement related to 'travel', the service proposer 300 can create the advertisement with the keyword 'travel.'

The service proposer 300 transfers the created mission to the service provider 100 in step 202. The service proposer 300 can be connected to the service provider 100 via wired and/or wireless network such that the service provider 100 and the service proposer 300 can communicate with each other via a wired and/or wireless interface.

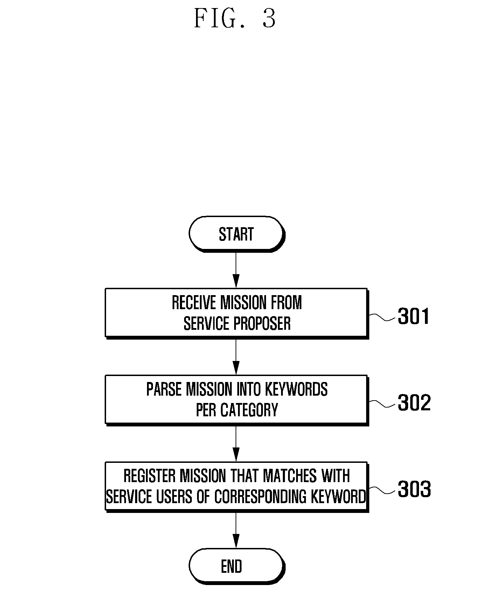

Next, the service provider 100 analyzes and registers the mission in step 203. Referring to FIG. 1, the service provider 100 can store the mission in the event DB 130. According to an exemplary embodiment of the present invention, the service provider 100 can receive and stores the personal information of the service user 200 in the service user DB 110 before the receipt of the mission from the service proposer 300. The personal information can include the basic personal information, such as a name, a sex, a height, an age, and a nickname. The details of step 203 are described below with reference to FIG. 3.

FIG. 3 is a flowchart illustrating details of step 203 of FIG. 2 according to an exemplary embodiment of the present invention.

Referring to FIG. 3, operations of the service provider 100 are shown. In step 301, the service provider 100 receives the mission from the service proposer 300. In FIG. 3, the mission provided from the service proposer 300 to the service provider 100 includes the keywords indicating the property of the mission.

In step 302, the service provider 100 performs parsing on the keywords by category of the mission received from the service proposer 300. For example, if the mission has an age category including the keyword "20's" and a hobby category including the keyword "travel", the service provider 100 parses the keywords "20's" and "travel".

In step 303, the service provider 100 registers the mission that matches with the service users associated with the corresponding keyword. Referring to FIG. 1, the service provider 100 searches the service user DB 110 for the service users 200 matching with the keyword parsed at step 302. In this example, the service provider 100 retrieves the service users of 20's and having the hobby of travel from the service user DB 110. Afterward, the service provider 100 can store the mission in the event DB 130 that matches with the retrieved service users 200.

According to an exemplary embodiment of the present invention, the service provider 100 can store the mission without matching with the service users 200 at step 303. In this case, the service provider 100 searches the service user DB 110 for the service users matching with the keywords parsed and provides the retrieved service users with the mission.

Returning to FIG. 2, the service provider 100 provides the service users 200 with the mission in step 204. According to an exemplary embodiment of the present invention, the service user 200 accesses the service provider 100 to request a list of missions, receives the mission list from the service provider 100, and requests a mission selected from the list from the service provider 100, such that the service provider 200 provides the service user 200 with the requested mission. In a case where the missions and the service users are classified into ranks according to an exemplary embodiment of the present, the service provider 100 compares the ranks of the missions and service user 200 with each other and supplies the list of missions of which ranks are equal to or lower than that of the service user 200.

The service provider 100 also stores the information on the service users in the service user DB 100 in advance, analyzes, when a mission is received from the service proposer 300, the keywords included in the mission, searches the service user DB 110 for the service users 200 fulfilling conditions, i.e., the keywords, and provides the retrieved service users with the mission. According to an exemplary embodiment of the present invention, if the information on the current location of the service user 200 is received, the service provider determines whether there is any mission that is to occur in the range of a predetermined radius around the current location of the service user 200 and provides, if any, the service user 200 with the mission.

According to an exemplary embodiment of the present invention, the service provider 100 compares the rank of the mission with that of the service user 200 to provide, only when the rank of the service user 200 is equal to or higher than that of the mission, the mission to the service user 200. The service user 200 can be provided one of basic, intermediate, and advanced ranks according to the number of executions of the mission and/or acquired points. The missions also can be classified into basic, intermediate, and advanced ranks such that the service provider 100 can provide only the missions of which ranks are equal to or less than the rank of the service user 200.

When providing the service user 200 with a mission, the service provider 100 can transfer the mission with question items prompting the service user to enter personal information. In an exemplary case of a 'coffee cup collect mission', the mission can be provided with the question of asking how many cups of coffee a day.

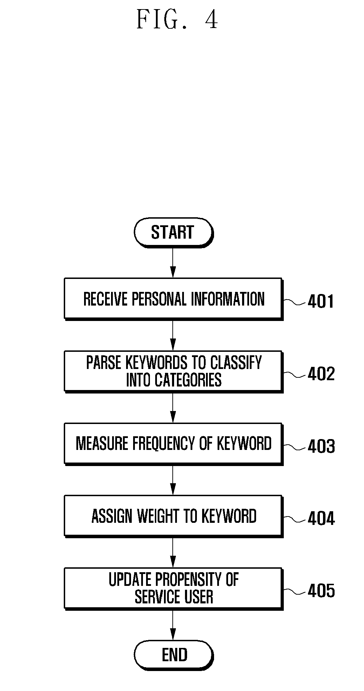

The service user 200 subscribes to the mission in step 205. That is, the service user 200 can choose whether to perform the mission or not. The service user 200 can enter the personal information so as to be transmitted to the service provider 100 in step 206. The service provider 100 saves the personal information in step 207, and the service user 200 performs the mission in step 208. The details of step 207 for storing the personal information are described below with reference to FIG. 4.

FIG. 4 is a flowchart illustrating details of step 207 of FIG. 2 according to an exemplary embodiment of the present invention. The service provider 100 receives the personal information from the service user 200 in step 401. The service provider 100 parses the personal information into keywords and classifies into categories in step 402. For example, if the personal information provided by the service user 200 includes "20's" and "travel", the service provider 100 classifies "20's" into the age category and "travel" into the hobby category.

The service provider 100 measures the frequency of the keyword in step 403. That is, whenever the personal information is received from the service user 200, the service provider 100 determines how often the same keyword is received. For example, whenever the keyword "travel" is received, the service provider 100 counts the number of times the keyword "travel" is received.

The service provider 100 assigns a weight to the keyword in step 404. If the same keyword is received repeatedly, the service provider 100 can assign a weight to the repeatedly received keyword. According to an exemplary embodiment of the present invention, the service provider 100 determines whether the number of times the same keyword is received is equal to or greater than a predetermined value and, if so, assigns a weight to the corresponding keyword. The weight assigned to the keyword is used as the information for determining the propensity of the user.

The service provider 100 updates the propensity of the user in step 405. In an exemplary embodiment of the present invention, the propensity of the user refers to the information on the hobbies and interests of the user. The service provider 100 updates the propensity of the service user 200 based on the weight assigned to the keyword. Referring to FIG. 1, the service provider 100 stores the updated propensity of the service user 200 in the service user DB 110. For example, if the personal information received from a specific service user 200 includes the keyword 'reading' and, since then, if the personal information including the keyword 'travel' is received repeatedly, the service provider 100 can assign the weight to the keyword 'travel' and update the propensity of the service user to 'prefer indoor activity' or 'prefer outdoor activity' .

While performing the mission, the service user 200 can share the mission with neighbor service users. In order to inform the provided mission to other users, the service user 200 can register a text message with the service provider 100 such that the service provider 100 permits the service users connected to the service provider 100 to access the text message. The service provider 100 can check the information on the current location of the service user 200 and then configure such that other users located in the range of a predetermined radius around the current location of the service user 200 can access the text message.

According to an exemplary embodiment of the present invention, when the service user 200 performs the mission, the service provider 100 can provide the information on the route from the current location of the service user 200 to the location where the mission is to occur. If the current location of the service user 200 is received, the service provider 100 calculates the optimal route to the location where the mission is to occur and provides the information of the optimal route to the service user 200. According to an exemplary embodiment of the present invention, the service provider 100 can calculate the shortest route between a specific location requested by the service user 200 and the location where the mission is to occur and provides the service user 200 and other service users with the information on the calculated route. Also, when a map image, on which the route between the location of a predetermined service user and the location where the mission is to occur is drawn, is received from the service user 200, the service provider 100 can provide the specific service user with map image. The specific service user can be guided by the map image to the location where the mission is to occur.

When the mission is completed in step 208, the service user 200 transfers the mission execution result to the service provider 100 in step 209. In an exemplary case where the service user 200 executes a mission of "to take and transmit a photo of building XX located in area 00', the service user 200 takes a photo and transmits the photo to the service provider 100. According to an exemplary embodiment of the present invention, the service user 200 can transfer an authentication number indicating the success of the mission execution to the service provider 100.

The service provider 100 verifies the success of the mission execution in step 210. For example, in the aforementioned example, the service provider 100 receives the photo transmitted by the service user 200, analyzes the photo to determine whether the subject in the photo is the building XX, and determines whether the mission has been successfully executed.

After determining whether the mission is executed successfully, the service provider 100 transmits the mission execution result to the service proposer 300 in step 211. According to an exemplary embodiment of the present invention, the service provider 100 can transmit the mission execution result only when the mission is executed successfully or regardless of whether the mission is executed successfully. The step for transmitting the mission execution result to the service proposer 300 also can be omitted. In this case, the service provider 100 can transmit the mission execution result to the service user 200 directly.

When the mission execution result is received from the service provider 100, the service proposer 300 can verify, in any case, the successful mission execution in step 212. The service proposer 300 verifies the successful mission execution in a case where the service provider 100 requests the service proposer 300 for the verification. According to an exemplary embodiment of the present invention, in a case where the mission executed by the service user 200 is the mission requiring authorization of a public organization, the service proposer 300 can transmit the mission execution result to a public authorization provider and receive the verification result from the public authorization provider.

The service proposer 300 gives the service user 200 the reward for the successful mission execution in step 213. The service proposer 300 can verify the successful mission execution by itself or based on the verification result transmitted by the public authorization provider.

According to an exemplary embodiment of the present invention, an experience point is given to the service user 200 whenever the service user executes the mission successfully. The accumulated experience points are updated in the service user DB 110 of the service provider 100.

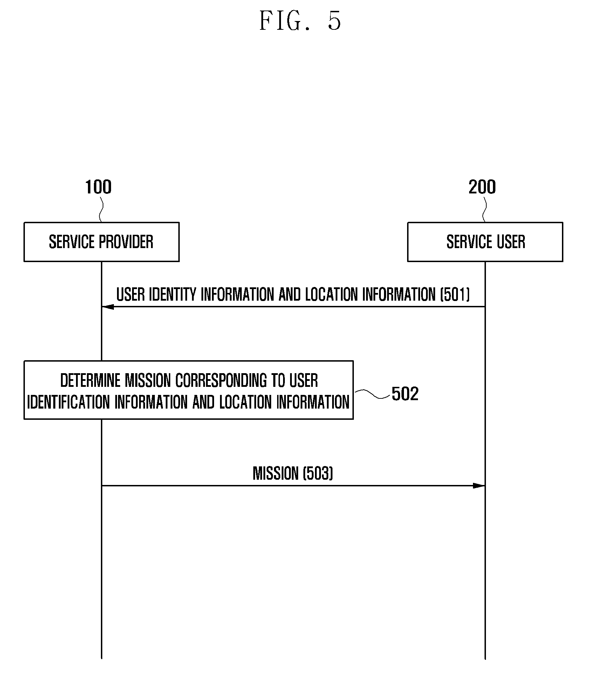

According to an exemplary embodiment of the present invention, the service provider 100 receives the information on the current location of the service user 200 periodically and provides the service user 200 with a mission. A detailed description thereof is provided below with reference to FIG. 5.

FIG. 5 is a signaling diagram illustrating a procedure for a service provider to provide a mission to a service user using a location-based service according to an exemplary embodiment of the present invention.

The service user 200 transmits user identity information and current location information to the service provider 100, and the service provider 200 receives the information transmitted by the service user 200 in step 501. The service user 200 connects to the service provider 100 and then transmits the user identity information and current location information.

If the user identity information and current location information are received from the service user 200, the service provider determines the mission corresponding to the information in step 502. With reference to the exemplary configuration of FIG. 1, the event DB 130 may store a list of missions, and each mission can be stored along with the occurrence location and keywords. If the user identity information is received from the service user 200, the service provider 100 searches the service user DB 110 for the qualified service users and the keywords configured in correspondence to the searched service user 200 and retrieves the list of the missions corresponding to the keywords. Among the missions, the service provider 100 retrieves the missions located in the range of a predetermined radius around the current location of the service user 200. The service provider 100 determines the finally classified mission as the mission to be provided to the service user 200.

According to an exemplary embodiment of the present invention, if the missions are stored in the event DB 130 that match with the service user 200 and if the user identity information of the service user 200 is received, the service provider 100 retrieves the mission stored that matches with the corresponding service user 200 and selects the missions that are to occur in the range of a predetermined radius of the current location of the service user 200 among the retrieved missions.

According to an exemplary embodiment of the present invention, the service provider 100 checks for the missions located in the range of a predetermined radius around the current position of the service user 200 and sorts out the missions stored that match with the corresponding service user 200 among the missions identified using the identity information of the service user 200.

The service provider 100 provides the service user 200 with the mission in step 503.

In exemplary embodiment of the present invention, the service user 200 connects to the service provider 100 to subscribe to the social network and, afterward, performs the mission provided by the service provider 100. In order to subscribe to the social network service, the service user 200 can register the basic personal information with the service provider 100. The basic personal information can include a name, a nickname, a height, and an age of the service user 200, and the service provider 100 stores the basic personal information in the service user DB 110. According to an exemplary embodiment of the present invention, the service provider 100 can configure the process for the service user 200 to transmit the basic personal information as a mission and determine, when all the items of the basic personal information are received, whether the mission is executed successfully.

In exemplary embodiment of the present invention, the service provider 100 can provide the service customized for the user according to a degree of accumulation of the personal information stored in the service user DB 110. For example, the service provider 100 classifies the service users 200 into basic, intermediate, and advanced users and provides the basic user with a mission for inputting basic personal information. If the basic information is entered completely by the basic user, the service provider promotes the basic user to the intermediate user and stores the promotion information in the service user DB 110. The service provider 100 also can provide the intermediate user with the common mission and/or common advertisement, receive detailed personal information from the intermediate user, and promote the intermediate user to the advanced user according to the number of mission executions, experience points, gained points, and accumulated amount of the personal information stored in the service user DB 110. The promotion information may also be stored in the service user DB 110.

The service provider 100 can provide the advanced user with a targeted mission or a targeted advertisement. The service provider 100 determines the propensity of the service user 200, such as interested fields and hobbies, based on the personal information stored in the service user DB 110 and provides the missions related to the propensity to the service user 200.

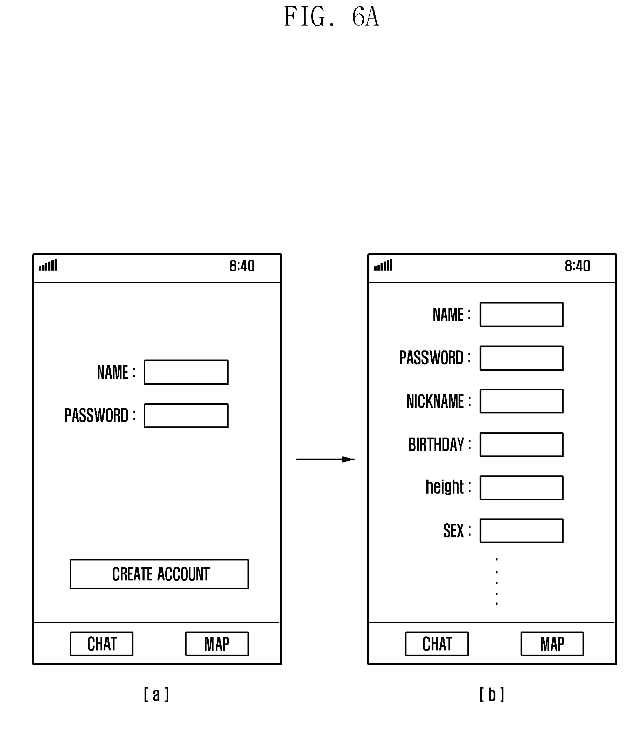

FIGs. 6A to 6G are diagrams illustrating exemplary screens presented in a method for providing a social network service according to an exemplary embodiment of the present invention.

Part [a] of FIG. 6A shows a login screen on which the user that is already subscribed to the service can log in by entering a name and a password and a user who wants to subscribe to the service can subscribe to the service by selecting the button entitled 'create account'. Part [b] of FIG. 6A shows an account creation screen which has text boxes for receiving basic personal information, such as a name, a password, a nickname, a birthday, and a sex of the user.

According to an exemplary embodiment of the present invention, the service provider 100 can assign a task for filling out text boxes on the account creation screen of part [b] of FIG. 6A as a mission. If all of the text boxes are filled out, the service provider 100 can store the personal information received through the text boxes in the service user DB 110 and promote the service user 200 to the intermediate user.

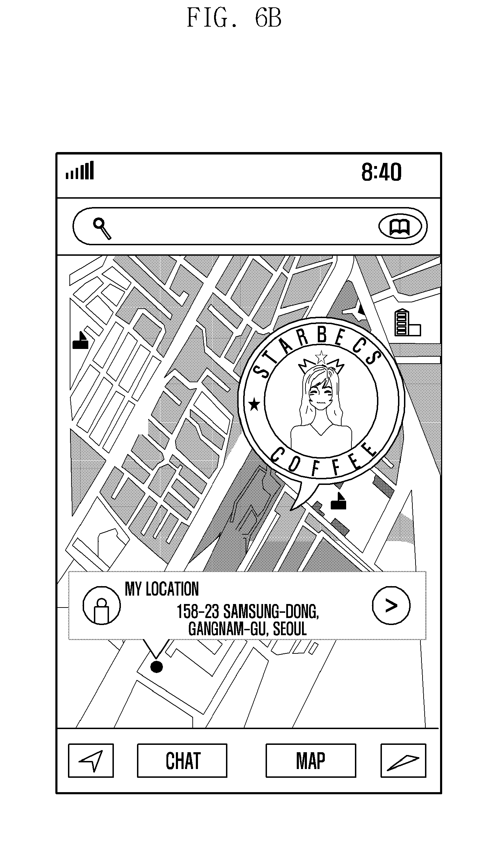

FIGs. 6B to 6G show the screens displayed in the process for executing a mission. FIG. 6B shows a map in which the current location of the service user 200 and an event location are pinpointed. After log-in to access the social network service, the service provider 200 sends the current location and user identity information to the service provider 100, and the service provider 100 provides the service user 200 with the information on the missions that occur in a predetermined radius around current location of the service user 200. In a case where there are other service users subscribed to the service around the service user 200, the same mission information is provided to the other service users.

According to an exemplary embodiment of the present invention, the service provider 100 can provide, if the current location of the service user 200 is received the service provider 100, the service user 200 with the information on the missions that occur around the service user 200 although the service user 200 is not logged in to the service.

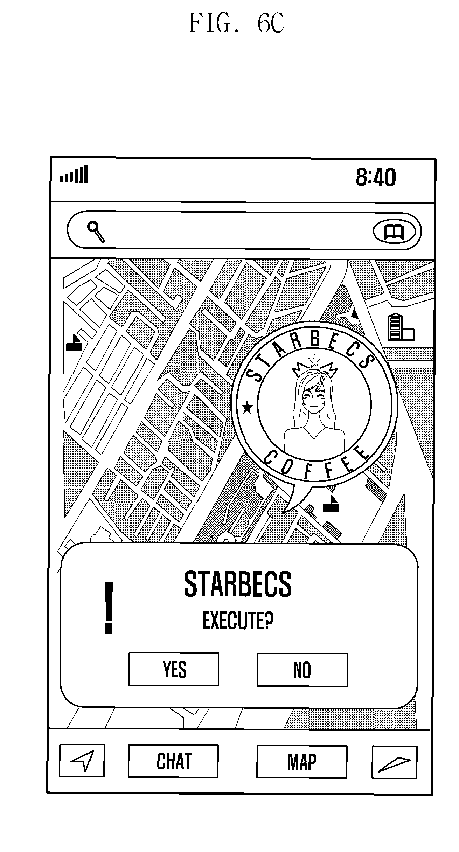

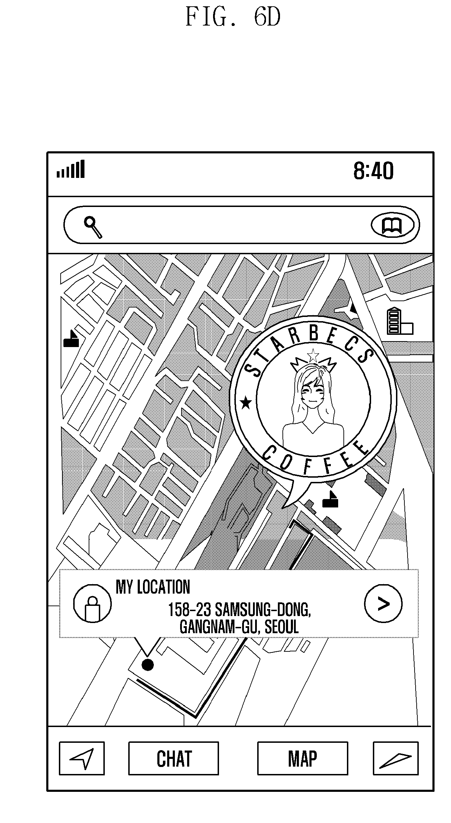

Referring to FIG. 6C, the screen image shows a popup window having a message asking whether to execute the mission such that the service user can take part in the corresponding service by selecting 'yes' button. If the service user 200 selects the 'yes' button, the service provider 100 receives a message from the service user 200 and confirms that the service user 200 accepts to perform the mission. The service user 200 moves to the location where the mission is to occur to execute the mission. At this time, the service provider 100 can provide the service user 200 with the route to the location where the mission is to occur. FIG. 6D shows the screen image presenting the route from the current location of the service user 200 to the location where the mission is to occur. The service user 200 can arrive at the location where the mission is to occur by following the route to execute the mission.

The service user 200 can share the information on the current location with other service users. The service user 200 can transmit a message accepting to open the current location information to others, and the service provider 100 can transmit the current location information of service user 200 to other service users requesting that information. The service user 200 also can transmit the current location information of his/her own to other service providers in the form of a message. At this time, the service user 200 can discover the service users located in the coverage area of the short range wireless communication module, such as Bluetooth, ZigBee, and Near Field Communication (NFC) module, and transmit his/her current location information to the discovered service users. The service provider 100 also can transmit a list of the service users located in a predetermined radius around the current location of the service user 200 such that the service user 200 is aware of neighbor service users located around the service user 200.

According to an exemplary embodiment of the present invention, the service user 200 can broadcast a message to notify the other service users around the service user 200 of the occurrence of the mission. If a list of the neighbor service users is received from the service provider 100, the service user 200 multicasts the message to some or all of the neighbor service users.

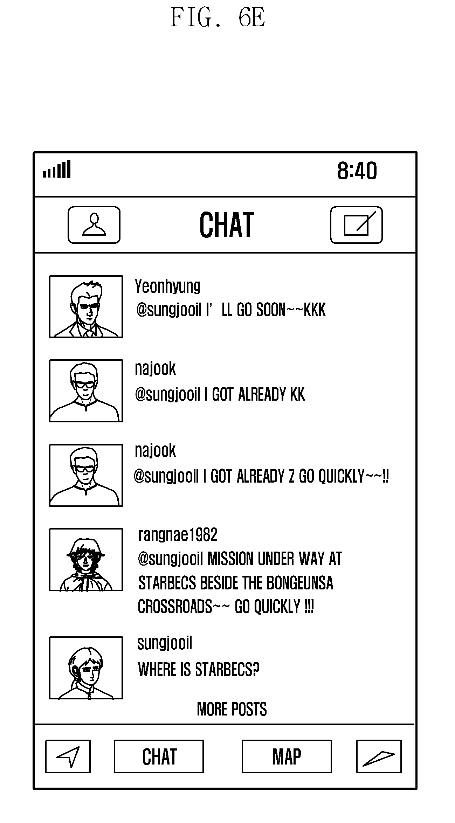

The service user 200 also can discover the service users located in the coverage area of the short range wireless communication module such as Bluetooth, ZigBee, and NFC module and notify some or all of the discovered service users of the occurrence of the mission. In a case where the service user 200 registers a text message notifying of the occurrence of mission with the service provider 100, the service provider 100 authorizes the neighbor service users around the service user 200 to access the registered text message. The neighbor service users can be aware of the occurrence of the mission by receiving the message transmitted by or registered with the service provider 100. FIG. 6E shows the screen presenting the list of the text messages registered with the service provider 100. The service user 200 can be aware of the missions that are to occur by checking the messages registered with the service provider 100. In this manner, the service user 200 can open the dialogue with other service users around, post text messages about the mission, and acquire information on the mission from the neighbor service users.

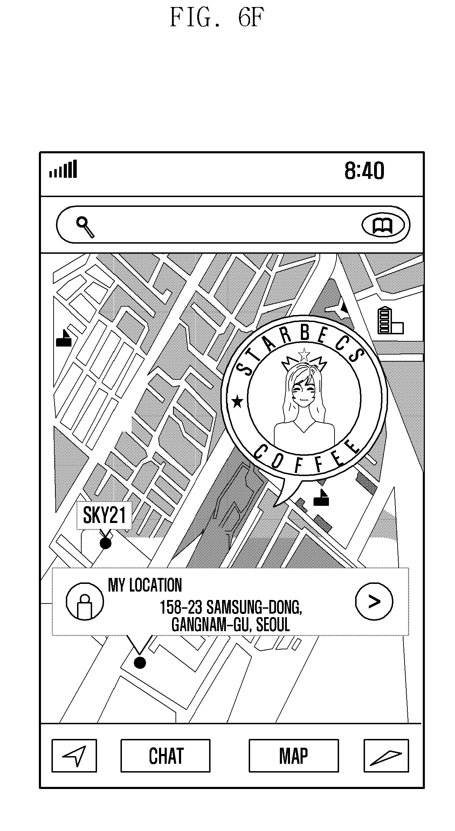

According to an exemplary embodiment of the present invention, the screen can present a map on which the locations of neighbor service users as well as the current location of the service user 200 are marked. FIG. 6F is the screen presenting the map on which the current locations of the service user 200 and neighbor users and the location where the mission is to occur are marked. If a neighbor service user (sky21) is configured to allow the service provider to open his/her current location and if the service user 200 requests the service provider 100 for the current location of the neighbor service users, the service provider 100 transmits the information of the current location of the neighbor service user to the service user 200.

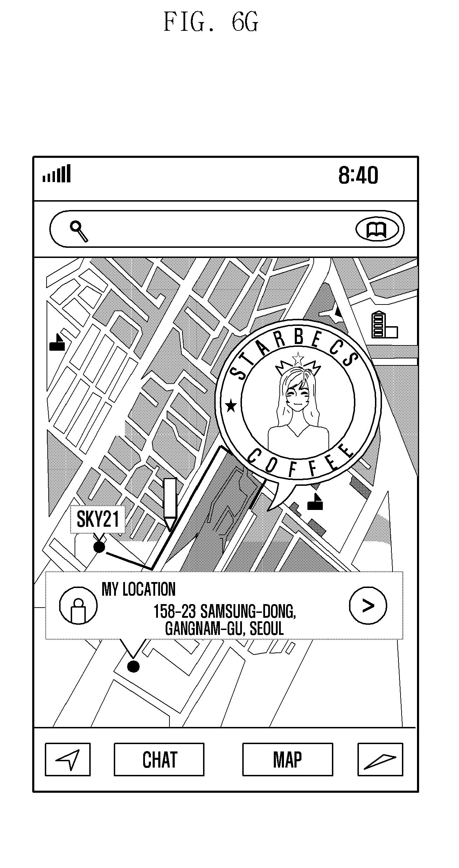

According to an exemplary embodiment of the present invention, the service user 200 draws and/or edits a route on the map and sends the map to other service users. FIG. 6G shows a screen displayed when the service user 200 creates a route drawn between the location of neighbor service user (sky21) and the location where the mission is to occur. The route information generated by the service user 200 is transmitted to the neighbor service user (sky21) with or without involvement of the service provider 100. Upon receipt of the route information, the neighbor service user (sky21) can arrive at the location where the mission is to occur according to the route information.

If the mission has been executed completely, the service user 202 registers the mission execution result with the service provider 100. The service provider 100 verifies the successful execution of the mission based on the mission execution result. In an exemplary mission of 'withdraw 10 paper cups', the service user 200 receives the authentication number in response to the completion of the mission, and the service provider 100 can verify the successful execution of the mission based on the authentication number transmitted by the service user 200.

In a case where the service user 200 has executed the mission successfully, the service provider 100 can give the service user the experience points. The experience points given to the service user 200 are recorded in the service user DB 110. The service provider 100 can promote the service user 200 to a higher rank according to the accumulated experience points recorded in the service user DB 100. With the promotion of the service user 200 to the higher rank, the service provider 100 can request the service user 200 for additional personal information. The personal information acquired additionally in this manner can be used to determine the mission to be provided to the service user 200 afterward. If the mission has been successfully executed by the service user 200, the service provider 100 or the service proposer 300 can give a certain reward, such as gift and coupon, to the service user 200.

Descriptions are made hereinafter of the procedures for providing the social network service according to exemplary embodiments of the present invention.

In a first exemplary embodiment, suppose that the service proposer 300, which is a café, creates and registers, with the service provider 100, a mission in which the task is to return 10 disposable cups used in the café, the mission execution is verified with an authentication number, the qualification for the mission is to have the experience of the visit to the café, the mission proposal range is the radius of 500m around the café, the mission execution period is between August 11, 2010 and August 12, 2010, and the reward for successful execution of the mission is a free coffee drink coupon and an experience points.

The service provider 100 parses the mission received from the service proposer 300 to retrieve the keyword 'coffee' and registers the mission so as to match with the keyword 'coffee'. At this time, the service provider 100 searches the service user DB 110 for the service users associated with the keyword 'coffee' and stores the users found to match with the mission.

The service provider 100 provides the service user 200 whose propensity is associated with the keyword 'coffee' with the mission. More particularly, the service provider 100 determines whether the service user 200 is located within the range of radius of 500m around the café and, if so, provides the service user 200 with the mission.

If the service user 200 returns 10 disposable cups to the café, the café issues an authentication number to the service user 200, and the service provider 100 verifies that the mission successful based on the authentication number issued to the service user 200. If the service provider 100 notifies the service proposer 300 of the success of the mission, the service proposer 300 grants the service user 200 the free coffee drink coupon and an experience point.

In a second exemplary embodiment, suppose that the service proposer 300, which is a drinking water manufacturer, creates and registers, with the service provider 100, a mission in which the task is to take a photo having the character of the corresponding drinking water manufacturer, the mission execution verification method is to refer to the recommendation of users, the qualification for the mission is to have the rank equal to or higher than intermediate rank, the mission execution period is between August 1, 2010 and August 31, 2010, and the reward for successful execution of the mission is a study tour coupon for a visit to the museum of the drinking water manufacturer and an experience point.

The mission can be delivered by the service provider 100 such that the service user 200 executes the mission. The service user 200 takes a photo and sends the photo to the service provider 100, and the service provider 100 opens the photo to the other service users. The service users can access the service user 100 to give a point to the photo. The service provider 100 can grant the study tour coupon for a visit to the museum of the drinking water manufacturer and an experience point to the service user 200 who acquired the most points.

In a third exemplary embodiment, suppose that the service proposer 300, which is a cookie manufacturer, creates and registers, with the service provider 100, a mission in which the task is to take a photo of the user posed with a specific product of the cookie manufacturer, the mission execution verification is performed by inspecting the photo, the qualification for the mission is the service user's rank equal to or greater than the intermediate rank, the mission execution period is between October 1, 2010 and November 31, 2010, and the reward for successful execution of the mission is a specific product gift coupon and an experience point.

The mission can be delivered by the service provider 100 such that the service user 200 executes the mission. The service user 200 takes a photo and sends the photo to the service provider 100, and the service provider 100 checks the photo and determines whether the photo shows the user posed with the specific product. If it is determined that the mission has been executed successfully, the service proposer 300 grants the corresponding service user 200 the specific product gift coupon and an experience point.

In the first to third exemplary embodiments, the service proposer 300 proposes the mission for the purpose of product promotion and image advertisement.

In a fourth exemplary embodiment, suppose that the service proposer 300, which is a mobile phone manufacturer, creates and registers, with the service provider 100, a mission in which the task is to collect and return used mobile phones to the manufacturer's agency, the mission execution verification is performed by checking an authentication number, the mission proposal range is the radius of 1km around each agency, no qualification is required for the mission, the mission execution period is between November 1, 2010 and November 31, 2010, and the reward for successful execution of the mission is a new model mobile phone and an experience point.

The service provider 100 proposes the mission to the service user 200 located within the radius of 1km from each agency such that the service user 200 can execute the mission delivered by the service provider 100. If the service user 200 returns the used mobile phone to the agency, the agency issues an authentication number to the service user 200 such that the service provider 100 determines, based on the authentication number transmitted by the agency, that the service user 200 has executed the mission successfully and provides the service user 200 drawn in a lottery with the new model mobile phone and an experience point.

In a fifth exemplary embodiment, suppose that the service proposer 300, which is the Red Cross, creates and registers, with the service provider 100, a mission in which the task is to contribute blood donation certificates, the mission execution is verified with an authentication number, the mission proposal range is the radius of 1km around each blood donation place, no qualification is required for the mission, the mission execution period is between September 1, 2010 and November 31, 2010, and the reward for the successful execution of the mission is a pair of movie admission tickets and an experience point.

The service provider proposes the mission to the service user 200 located within the radius of 1km around each blood donation place such that the service user 200 can execute the mission delivered by the service provider 100. If the service user 200 returns the blood donation certificate at the blood donation place, an authentication number is issued to the service user and sent to the service provider such that the service provider 100 verifies the mission execution and grants the corresponding service user 200 the movie admission tickets and an experience point.

In a sixth exemplary embodiment, suppose that the service proposer 300, which is a 00 flower village, creates and registers, with the service provider 100, a mission in which the task is to participate in a footrace with the children of the 00 flower village, the mission execution is verified with an authentication number, the mission proposal range is the radius of 1km around the 00 flower village, no qualification is required for the mission, the mission execution period is between September 1, 2010 and November 31, 2010, and the reward for the successful execution of the mission is an experience point.

The service provider 100 proposes the mission to the service users located in the radius of 1km around the 00 flower village such that the service user 200 can execute the mission delivered by the service provider 100. Once the service user participates in the footrace with the children of the 00 flower village, an authentication number is issued to the service user 200 and transferred to the service provider 100 such that the service provider 100 verifies the successful execution of the mission and grants the service user 200 the experience point.

In the fourth to sixth exemplary embodiments, the missions are public interest missions such that the service proposers of these missions can expect promotion of the public interest.

In a seventh exemplary embodiment, the service proposer 300, which is a amusement park company, creates and registers, with the service provider 100, a mission in which the task is to report missing children, the mission execution is verified by the check of the service proposer, the mission proposal range is the radius of 10km around the amusement part, no qualification is required for the mission, the mission execution period is between October 1, 2010 and October 31, 2010, and the reward for the successful execution of the mission is an amusement park admission ticket and an experience point.

The service provider 100 transmits the information on the mission to the service user 200 located within the range of 10km around the amusement park such that the service user 200 can execute the mission indicated in the information provided by the service provider 100. The service user 200 reports a missing child and brings the missing child to the service proposer 300, the service proposer 300 issues an authentication number to the service user 200 such that the service provider 200 can verify the execution of the mission based on the authentication received from the service proposer 300 and grants the corresponding service user 200 the amusement park admission ticket and an experience point.

In the seventh exemplary embodiment, the mission is private such that the service proposer 300 can cooperate with others located around for a task proposed as a mission.

In an eighth exemplary embodiment, suppose that the service proposer 300, which is a company, creates and registers, with the service provider 100, a mission in which the task is to challenge a costume play with more than 10 people, the mission execution is verified with a photo, the execution proposal range is the radius of 500m around a specific location, the qualification for the mission is the service user's rank equal to or greater than the intermediate rank, the mission execution period is between October 1, 2010 and October 31, 2010, and the reward for successful execution of the mission is an amusement park admission ticket and an experience point.

The service provider 100 delivers the mission the service user 200 located in the radius of 500m around a specific location such that the service user 200 can execute the mission delivered from the service provider 100. If the service user 200 takes a photo with other users and sends the photo to the service provider 100, the service provider 100 verifies the successful execution of the mission by checking the photo and grants the amusement park admission ticket and an experience point to the service user 200.

In the eighth exemplary embodiment, the mission provides a chance to expand the social relations and develop intimacy with the coworkers in the company.

The service proposer can provide the service provider with the service registration fee so as to earn the profit. The service provider 100 receives the personal information of the service user 200 and provides the service proposer 300 with the personal information such that the service proposer 300 can establish and infrastructure to create the mission or advertisement targeting specific users. The service provider 100 provides the service customized to the personal propensity of the service user according to the personal information provided by the service user 200.

The service proposer 300 can give the service user 200 the reward, such as gift and coupon, and the service user 200 buys the products manufactured by the service proposer 300 such that both the service user 200 and service proposer 300 can acquire profit.

That is, the service proposer 300 proposes an advertisement type mission to the service provider 100 and negotiates the advertisement fee with the service provider 100, the service provider posts or deliver the mission to the service user 200, the service user 200 executes the mission, whereby the service proposer 300 makes a profit and the service user 200 receives the reward for the mission execution.

In exemplary embodiment of the present invention, the mission can be delivered to the service user 200 in a pull mode in which the service user accesses the service provider 100 to check for the mission or in the push mode in which the service provider transmits the mission to the service user 200. In a case of the pull mode delivery, the service provider 100 provides the service user 200 with a list of missions such that the service user 200 can select a mission to be delivered from the list.

For example, the service user 200 who is preparing for a job application can access the service provider 100 to check a list of volunteer activities and select one of the volunteer activities as a mission to execute. At this time, the service user can broadcast a message or register a text notifying of the mission to summon other users to take part in the mission. After completing the mission, the service user 200 transmits the mission execution result to the service provider 100 such that the service execution result can be verified by the service provider 100, service proposer 300, or public authorization provider. The service proposer 300 or service provider 100 gives the predetermined point to the service user. The service user 200 can use the point in public volunteer activity authorization organizations, and accumulated points over a predetermined amount can be approved as additional points in applying to a public enterprise or large private enterprise.

Suppose another exemplary case where the service user 200 preferring volunteer activities accesses the service provider 100 to select and execute a volunteer activity mission for donating books. The service user 200 is likely to donate a collection of book but cannot do because a few books are missing. The service user 200 broadcasts a message or registers a text with the service provider 100 to request other service users for the missing books. At this time, the service user 200 can discover the service users within the coverage of a short range wireless communication module, such as Bluetooth, ZigBee, and NFC module, and request the discovered service users for the mission books. In this manner, the service user 200 can collect the missing books from other service users to donate the complete collection of the books. The service user 200 also can receive a predetermined amount of points as reward from the service provider 100 or the service proposer 300 and use the points in the public volunteer activity authorization organizations.

Suppose another exemplary case where the service user 200 preferring travel and photographing registers the hobby (i.e., travel and photography) as personal information with the service provider 100 and receives a travel information book writing mission from the service provider 100 in a push mode. In the nick of time, the service user 200 retains the photos necessary for writing a travel information book so as to accept the mission. The service user 200 can execute the mission by linking his/her blog to a part of the travel information book. Afterward, when the travel information book is published, the service user 200 can be registered as one of co-writers and acquire a reward, such as predetermined amount of points or a gift.

Suppose another exemplary case where the service user 200 preferring beer and chicken registers the hobby (i.e., beer and chicken) as personal information with the service provider 100 and receives a discount event advertisement of a chicken store from the service provider 100 in a push mode. The service provider 100 checks the current location of the service user 200 and, when the service user 200 is located in a predetermined radius around the chicken store, delivers the discount event advertisement of the chicken store to the service user 200. In this manner, the service user 200 can buy chicken at discounted cost.

Suppose another exemplary case where the service user 200 lacking knowledge about computers can access the service provider 100 to register a computer fix mission when his/her computer breaks down. The service user 200 can register the conditions for the mission, such as the location in a predetermined radius and the qualification as computer specialist, with the service provider 100. The service users within the predetermined radius can access the service provider 200 and check the mission, and the service provider 100 can deliver the mission to the service user who is the computer specialist located in the predetermined radius in a push mode operation.

According to an exemplary embodiment of the present invention, after registering a mission with the service provider 100, the service user 200 discovers neighbor service users in the radio coverage of the short range wireless communication module, such as Bluetooth, ZigBee, and NFC module, and transfers a message to the discovered neighbor service users.

In a case where multiple users request for a mission, the service provider 100 provides the service user 200 with a list of the users requested for the mission such that the user 200 can select another user from the list. The service provider 100 can provide the list of the users with the point rankings such that the service user 200 can select the user to execute the mission by referencing the point rankings. If the user to execute the mission is selected, the service user 200 sends a message to the corresponding user and, as a consequence, establishes a communication link with the user to execute the mission. The service provider 100 also notifies the service user 200 of the information on the users requested for the mission in temporal order of requests.

The exemplary embodiments of present invention allow the users to develop relationships naturally and share local advertisements, communicate among each other via broadcast messages, and improve the utilization of the service by sharing location information bi-directionally.

The exemplary embodiments of present invention allow a user to receive the social network service available at a current location. More particularly, the user can receive the information on the events that occur in a predetermine radius around the current location and share the events with the neighbor users. Since the location information can be shared with adjacent users, the user can execute a mission in cooperation with the adjacent user. By sharing the mission, the user can have a chance to meet neighbor users naturally and strengthen friendships with them. Since the service is provided as customized to the propensity and interest of the user, the user can receive information about the events associated with his/her propensity and interest.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for providing a service in a social network system including a service proposer, a service provider, and a service user, the method comprising:
transmitting an event generated by the service proposer from the service proposer to the service provider;
registering the event with the service provider;
transmitting the registered event from the service provider to the service user;
transmitting personal information input by the service user who is performing the event from the service user to the service provider; and
updating, at the service provider, a personal information database with the personal information received from the service user.

2. The method of claim 1, further comprising:
transmitting, when the event is executed completely, event execution result information from the service user to the service provider;
verifying execution of the event based the event execution result information;
transmitting, when the execution of the event is verified, event execution success information from the service provider to the service proposer;
generating, at the service proposer, reward information for the event execution success; and
transmitting the reward information to the service user.

3. The method of claim 1, wherein the registering comprises:
categorizing properties of the event into at least one keyword; and
registering the event that matches with the service users categorized by the same keyword.

4. The method of claim 1, wherein the updating comprises:
parsing the personal information to extract at least one keyword;
measuring accumulation frequency of the parsed keyword;
assigning a weight to the keyword based on the measured accumulation frequency; and
updating propensity of the service user in the personal information database based on the keyword assigned the weight.

5. The method of claim 1, further comprising:
transmitting user identity information and current location information from the service user to the service provider; and
determining, at the service provider, an event to be proposed to the service user based on the user identity information and current location information.

6. The method of claim 5, further comprising:
calculating, at the service provider, a route between the current location of the service user and a location where the event is to occur; and
providing the service user with the calculated route.

7. The method of claim 6, further comprising:
discovering, at the service provider, neighbor service users located in a predetermined radius around the current location of the service user; and
providing the service user with a list of the discovered neighbor service users.

8. The method of claim 7, further comprising:
requesting, at the service user, the service provider for a specific neighbor service user; and
providing, at the service provider, the service user with the location of the specific neighbor service user.

9. The method of claim 8, further comprising:
transmitting a route information between the location of the specific neighbor service user and he location where the event is to occur from the service user to the service provider, the route information being input by the service user; and
providing, at the service provider, the specific neighbor service user with the route information.

10. The method of claim 5, further comprising:
transferring a message from the service user to the service provider;
discovering neighbor service users located in a predetermined radius around the current location of the service user; and
permitting, at the service provider, only the discovered neighbor service users to access the message.

11. A social network system, the system comprising:
a service proposer for generating an event and reward information for execution of the event and for providing service users with the reward information;
a service provider for receiving the event from the service proposer, for registering the event, for providing the service users with the registered event, for receiving personal information from the service users, and for updating a personal information database with the received personal information;
a service user for receiving the event from the service provider, for transmitting personal information to the service provider while performing the received event, and for receiving the reward information from the service provider as a reward for successful execution of the event.

12. The system of claim 11, wherein the service provider verifies, when an event execution result is received from the service user, execution of the event, and transmits, when the execution of the event is verified, event execution success information to the service proposer.

13. The system of claim 11, wherein the service provider categorizes properties of the received event into at least one keyword and registers the event in match with the service users categorized by the same keyword.

14. The system of claim 11, wherein the service provider parses the personal information to extract at least one keyword, measures accumulation frequency of the parsed keyword, assigns a weight to the keyword based on the measured accumulation frequency, and updates propensity of the service user in the personal information database based on the keyword assigned the weight.

15. The system of claim 11, wherein the service provider receives user identity information and current location information from the service user and determines an event to be proposed to the service user based on the user identity information and current location information.
